(19) Europäisches Patentamt
European Patent Office
Office européen des brevets

(11) Veröffentlichungsnummer: **0 153 579 B1**

(12) # EUROPÄISCHE PATENTSCHRIFT

(45) Veröffentlichungstag der Patentschrift: **14.06.89**

(51) Int. Cl.⁴: **C 08 G 18/70**, C 08 G 18/80, C 08 G 18/66, C 09 J 3/16, C 08 G 18/50

(21) Anmeldenummer: **85100533.0**

(22) Anmeldetag: **19.01.85**

(54) **Verwendung von hitzehärtbaren Polyurethanharnstoff-Reaktiv-Klebstoffmassen.**

(30) Priorität: **02.02.84 DE 3403499**

(43) Veröffentlichungstag der Anmeldung: **04.09.85 Patentblatt 85/36**

(45) Bekanntmachung des Hinweises auf die Patenterteilung: **14.06.89 Patentblatt 89/24**

(84) Benannte Vertragsstaaten: **BE DE FR GB IT NL SE**

(56) Entgegenhaltungen:
**EP-A- 0 062 780**
**EP-A- 0 100 508**
**EP-A- 0 103 323**
**EP-A- 0 131 902**
**BE-A- 651 504**

(73) Patentinhaber: **BAYER AG, D-5090 Leverkusen 1 Bayerwerk (DE)**

(72) Erfinder: **Hombach, Rudolf, Dr., Johann-Janssen-Strasse 24, D-5090 Leverkusen (DE)**
Erfinder: **Dollhausen, Manfred, Dr., Herzogenfeld 21, D-5068 Odenthal (DE)**
Erfinder: **Hess, Heinrich, Dr., Körnerstrasse 5, D-5090 Leverkusen 1 (DE)**
Erfinder: **Grögler, Gerhard, Dr., von-Diergardt-Strasse 46, D-5090 Leverkusen 1 (DE)**
Erfinder: **Kopp, Richard, Dr., Wolfskaul 12, D-5000 Köln 80 (DE)**
Erfinder: **Reischl, Artur, Dr., H.T.-von-Böttinger-Strasse 19, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft die Verwendung von bei Raumtemperatur stabilen, aber bei höherer Temperatur schnell abbindenden, hitzehärtenden Polyurethanharnstoff-Reaktivmassen als Klebstoff.

Die Verwendung von Polyisocyanaten im Gemisch mit Polyaminen oder Polyolen als Klebstoffe ist im Prinzip bekannt. Da die Polyisocyanate bei Raumtemperatur mit den Polyaminen oder Polyolen reagieren, sind derartige Klebstoffmischungen bei Raumtemperatur nicht lagerstabil. Sie müssen daher erst kurz vor ihrer Anwendung durch Vermischen der getrennt aufbewahrten Reaktionskomponenten hergestellt und innerhalb der begrenzten Topfzeit verarbeitet werden.

Zur Herstellung bei Raumtemperatur lagerstabiler Klebstoffmassen wurden auch bereits blokkierte Polyisocyanate eingesetzt, bei denen die Isocyanatgruppen mit monofunktionellen Verbindungen wie Phenol, Caprolactam, Malonestern oder ähnlichen Verbindungen vollständig umgesetzt sind. Diese blockierten Polyisocyanate spalten bei erhöhter Temperatur reversibel das Blokkierungsmittel ab und setzen das Polyisocyanat für die nachfolgende, im allgemeinen irreversible Polyadditionsreaktion zum Klebstoff frei (vgl. Vieweg/Höchtlen, Kunststoffhandbuch, Band 7, Polyurethane, Carl-Hanser-Verlag, München 1966).

Nachteilig bei diesem Verfahren ist der Verbleib des Blockierungsmittels in relativ hohen Mengen im Klebefilm. Zudem ist die Deblockierungstemperatur von lagerbeständigen, geblockten Polyisocyanaten im allgemeinen sehr hoch. Vor Erreichen der Reaktionstemperatur von derartig blokkierten Klebstoffsystemen tritt aber infolge des durch die hohe Temperatur bewirkten Viskositätsabfalls ein Ablaufen des Klebstoffs von senkrechten Flächen ein. Bei Kunststoffen kann zudem durch die starke Wärmeeinwirkung eine Deformation und Beschädigung eintreten.

Lagerstabile Klebstoffe lassen sich auch durch Abmischung von Polyurethanprepolymeren, die nur wenig freies Isocyanat enthalten, mit einem Komplex aus Alkalisalz und 4,4'-Diaminodiphenylmethan herstellen. Durch Hitzeeinwirkung wird das im Komplex gebundene Diamin freigesetzt und reagiert mit dem NCO-Prepolymer (siehe EP-A 62 598). Ein Nachteil dieser Formulierung besteht in dem hohen Alkalisalzanteil, der nach Härtung im Klebstoff verbleibt. Hierdurch wird die Wasserfestigkeit der Klebung beträchtlich verringert.

In der DE-A 1 570 548 wird ein längere Zeit lagerfähiges Einkomponentensystem beschrieben, welches aus einem Gemisch von 1 Mol eines Polyesters, Polyethers oder Polythioethers, mindestens 1,5 Mol eines Uretdiongruppen enthaltenden festen Isocyanates mit einem Schmelzpunkt $\geqslant 100\,°C$ und mindestens 0,3 Mol eines festen Kettenverlängerungsmittels mit OH- und/oder $NH_2$-Gruppen mit einem Schmelzpunkt $\geqslant 80\,°C$ besteht. Dabei müssen mindestens 80% der festen Gemischbestandteile mit einer Teilchengröße $\leqslant 30\,\mu m$ vorliegen. Die Lagerbeständigkeit beträgt bei Raumtemperatur einige Tage bis einige Wochen, bei 50 °C nur einige Stunden. Ein Nachteil des Verfahrens liegt darin, daß von drei Reaktionspartnern mindestens zwei in fester Form vorliegen müssen, um die nötige Lagerstabilität zu gewährleisten. Das führt dazu, daß im allgemeinen sehr hochviskose Gemische erhalten werden, deren Viskosität langsam immer weiter ansteigt, weil keine der Verbindungen in ihrer Reaktivität verlangsamt wurde.

Die aus der ständigen Viskositätszunahme ersichtliche Reaktion an der Oberfläche der festen Isocyanat-Teilchen erfolgt unspezifisch und praktisch zu langsam und ergibt daher keine ausreichende Retardierung der Reaktivität der Polyisocyanate unter Selbststabilisierung des Systems.

In der DE-A-3 112 054 (= EP-A-62 780) werden bei Raumtemperatur lagerstabile hitzehärtbare Stoffmischungen aus Polyisocyanat und Polyol beschrieben. In diesen Stoffmischungen liegt das Polyisocyanat in Form von diskreten Teilchen in einem Polyol vor, wobei die Polyisocyanatteilchen an ihrer Oberfläche zu 0,5 bis 20 Äquivalentprozent der insgesamt vorhandenen Isocyanatgruppen durch teilweise Umsetzung mit Wasser, Polyolen oder Polyaminen desaktiviert sind. Diese Stoffmischungen eignen sich als Beschichtungs- und Verklebungsmittel sowie als Dichtungsmassen, insbesondere als Unterbodenschutz für Kraftfahrzeuge.

Die ältere EP-A-100 508 beschreibt lagerstabile Mischungen aus Polyisocyanat und reaktionsfähigen Verbindungen, enthaltend Polyamine mit einem sehr hohen Molekulargewicht. In der älteren EP-A-103 323 werden ebenfalls stabilisierte Polyisocyanatgemische angegeben, aber ohne Hinweis auf eine Verwendung als Klebstoff. Die ältere EP-A-131 902 bezieht sich auf Stoffgemische aus Polyisocyanaten und Polyolen und/oder Polyaminen mit einer OH-Zahl unter 112 und entsprechend hohem Molekulargewicht.

Aufgabe der Erfindung war es, verbesserte Klebstoffmassen auf Basis stabilisierter Polyisocyanate retardierter Aktivität bereitzustellen, insbesondere mit verbesserter Klebefestigkeit und guter Lagerstabilität.

Gegenstand der Erfindung ist die Verwendung von bei Raumtemperatur oder wenig erhöhten Temperaturen fließfähigen oder leicht aufschmelzenden, lagerstabilen, durch Erwärmen auf eine Temperatur oberhalb 80 °C härtbaren Massen, enthaltend

A) feinteilige Polyisocyanate mit einem Schmelzpunkt $> 40\,°C$,

B) aliphatische und/oder aromatische Polyamine und/oder Polyole mit Molekulargewichten von 400 bis 6000, sowie gegebenenfalls

C) aromatische Polyamine und/oder aliphatische und/oder cycloaliphatische Polyole mit Molekulargewichten von 62 bis 399,

als Reaktivklebstoff, wobei

– die Polyisocyanate A) durch Reaktion von 0,1–25% ihrer NCO-Gruppen mit Polyaminen, Hydrazin, Alkylhydrazinen, Hydraziden, Amidinen

und/oder Guanidinen unter Ausbildung einer Oberflächenhülle modifiziert worden sind,

– mindestens 25% der Summe aus OH- und $NH_2$-Gruppen in den Komponenten B) und C) $NH_2$-Gruppen sind und

– die Verwendung von Massen mit einem mittleren Äquivalentgewicht der Komponenten B) + C) >500 ausgenommen ist.

Es ist eine überraschende Tatsache, daß Amine trotz ihrer höheren Reaktivität gegenüber NCO im Vergleich zu Polyolen eine solche Verbesserung der Lagerbeständigkeit feinverteilt vorliegender, fester Polyisocyanate retardierter Reaktivität in Einkomponenten-PUH-Reaktiv-Klebstoffmassen bewirken.

Als Ausgangskomponenten für die erfindungsgemäß eingesetzten, oberflächenmodifizierten, stabilisierten, festen Polyisocyanate A) sind alle Di- oder Polyisocyanate oder deren beliebige Gemische geeignet, sofern sie einen Schmelzpunkt oberhalb 40 °C, bevorzugt oberhalb 80 °C, besonders bevorzugt oberhalb 130 °C aufweisen.

Es können dies aliphatische, cycloaliphatische, araliphatische, bevorzugt aber aromatische und heterocyclische Polyisocyanate sein, ferner Polyphenyl-polymethylen-polyisocyanate, erhalten durch Anilin-Formaldehyd-Kondensation und anschließende Phosgenierung nach den britischen Patentschriften 874 430 und 848 671, weiterhin perchlorierte Arylpolyisocyanate, Carbodiimidgruppen aufweisende Polyisocyanate, Allophanatgruppen aufweisende Polyisocyanate, Isocyanuratgruppen aufweisende Polyisocyanate, Urethan- oder Harnstoffgruppen aufweisende Polyisocyanate, acylierte Harnstoffgruppen aufweisende Polyisocyanate, Biuretgruppen aufweisende Polyisocyanate, durch Telomerisationsreaktion hergestellte Polyisocyanate, Estergruppen aufweisende Polyisocyanate, ferner bevorzugt Uretdiongruppen aufweisende Diisocyanate und Harnstoffgruppen aufweisende Diisocyanate. Als Beispiele für die einsetzbaren Polyisocyanate seien genannt:

| | Fp.: |
|---|---|
| p-Xylylendiisocyanat | 45–46 °C |
| 1,5-Diisocyanatomethylnaphthalin | 88–89 °C |
| 1,3-Phenylendiisocyanat | 51 °C |
| 1,4-Phenylendiisocyanat | 94–96 °C |
| 1-Methylbenzol-2,5-diisocyanat | 39 °C |
| 1,3-Dimethylbenzol-4,6-diisocyanat | 70–71 °C |
| 1,4-Dimethylbenzol-2,5-diisocyanat | 76 °C |
| 1-Nitrobenzol-2,5-diisocyanat | 59–61 °C |
| 1,4-Dichlorbenzol-2,5-diisocyanat | 134–137 °C |
| 1-Methoxybenzol-2,4-diisocyanat | 75 °C |
| 1-Methoxybenzol-2,5-diisocyanat | 89 °C |
| 1,3-Dimethoxybenzol-4,6-diisocyanat | 125 °C |
| Azobenzol-4,4'-diisocyanat | 158–161 °C |
| Diphenylether-4,4'-diisocyanat | 66–68 °C |
| Diphenylmethan-4,4'-diisocyanat | 42 °C |
| Diphenyl-dimethylmethan-4,4'-diisocyanat | 92 °C |
| Naphthalin-1,5-diisocyanat | 130–132 °C |
| 3,3'-Dimethylbiphenyl-4,4'-diisocyanat | 68–69 °C |
| Diphenyldisulfid-4,4'-diisocyanat | 58–60 °C |
| Diphenylsulfon-4,4'-diisocyanat | 154 °C |
| 1-Methylbenzol-2,4,6-triisocyanat | 75 °C |
| 1,3,5-Trimethylbenzol-2,4,6-triisocyanat | 93 °C |
| Triphenylmethan-4,4',4''-triisocyanat | 89–90 °C |
| 4,4'-Diisocyanato-(1,2)-diphenylethan | 88–90 °C |
| dimeres 1-Methyl-2,4-phenylendiisocyanat | 156 °C |
| dimeres 1-Isopropyl-2,4-phenylendiisocyanat | 125 °C |
| dimeres 1-Chlor-2,4-phenylendiisocyanat | 177 °C |
| dimeres 2,4'-Diisocyanatodiphenylsulfid | 178–180 °C |
| dimeres Diphenylmethan-4,4'-diisocyanat | |
| 3,3'-Diisocyanato-4,4'-dimethyl-N,N'-diphenylharnstoff | |
| 3,3'-Diisocyanato-2,2'-dimethyl-N,N'-diphenylharnstoff | |
| N,N'-Bis[4(4-Isocyanatophenylmethyl)-phenyl]harnstoff | |
| N,N'-Bis[4(2-Isocyanatophenylmethyl)-phenyl]harnstoff. | |

Erfindungsgemäß besonders bevorzugt werden dimeres
1-Methyl-2,4-diisocyanatobenzol, dimeres
4,4'-Diisocyanato-diphenylmethan,
3,3'-Dimethyl-4,4'-diisocyanato-diphenyl,
der 3,3'-Diisocyanato-4,4'-dimethyl-N,N'-diphenylharnstoff,
der Bis-N,N'-[4-(4-Isocyanatophenylmethyl)-phenyl]-harnstoff,
1,5-Naphthalin-diisocyanat, und
1,4-Phenylen-diisocyanat.

Die dimeren Diisocyanate können auch durch «in situ»-Dimerisierung, in z.B. Weichmachern, Lösungsmitteln, Wasser oder Polyolen feinverteilt hergestellt und gegebenenfalls in dieser Form der «Stabilisierung» unterworfen werden.

Zur Modifizierung der genannten Polyisocyanate werden z.B. zwei- oder mehrfunktionelle, nieder- oder höhermolekulare Verbindungen mit aliphatisch gebundenen, primären und/oder sekundären Aminogruppen und einem Molekulargewicht von 60 bis etwa 6000, vorzugsweise 60 bis 3000, eingesetzt. Es sind dies niedermolekulare und/oder höhermolekulare primäre und/oder sekundäre Polyamine, bevorzugt mit Funktionalitäten von 2 oder von 2 bis 3, oder ihre Mischungen, besonders bevorzugt aber Diamine. Die Aminogruppen sind dabei an aliphatische Gruppen (einschließlich cycloaliphatische, oder an den aliphatischen Rest von araliphatischen Gruppen) gebunden. Die aliphatischen bzw. cycloaliphatischen Di- und Polyamine können gegebenenfalls neben den Aminogruppen auch noch OH-Gruppen, tertiäre Aminogruppen, Ethergruppen, Thioethergruppen,

Urethangruppen, Harnstoffgruppen, Carboxylgruppen, Carbonsäurealkylestergruppen, Sulfonatgruppen, Carboxylatgruppen oder Sulfonsäureestergruppen aufweisen.

Erfindungsgemäß einsetzbare Di- und Polyamine sind z.B.
Ethylendiamin, 1,2- und 1,3-Propandiamin,
1,4-Butandiamin, 1,6-Hexandiamin,
Neopentandiamin,
2,2,4- und 2,4,4-Trimethyl-1,6-diaminohexan,
2,5-Dimethyl-2,5-diaminohexan,
1,10-Decandiamin, 1,11-Undecandiamin,
1,12-Dodecandiamin,
Bis-aminomethyl-hexahydro-4,7-methano-indan (TCD-Diamin),
1,3-Cyclohexandiamin, 1,4-Cyclohexandiamin,
1-Amino-3,3,5-trimethyl-5-aminomethylcyclohexan (Isophorondiamin),
2,4- und/oder 2,6-Hexahydrotoluylendiamin,
2,4'- und/oder 4,4'-Diaminodicyclohexylmethan,
m- oder p-Xylylendiamin,
Bis-(3-aminopropyl)-methylamin,
Bis-N,N'-(3-aminopropyl)-piperazin und
1-Amino-2-aminomethyl-3,3,5-(3,5,5)-trimethylcyclopentan,
2,2-Dialkylpentan-1,5-diamine oder
Triamine wie 1,5,11-Triaminoundecan,
4-Aminomethyl-1,8-diaminooctan,
Lysinmethylester, cycloaliphatische Triamine gemäß DE-OS 2 614 244,
4,7-Dioxadecan-1,10-diamin,
2,4- und 2,6-Diamino-3,5-diethyl-1-methylcyclohexan und deren Gemische,
alkylierte Diaminodicyclohexylmethane,
z.B. 3,3'-Dimethyl-4,4'-diaminodicyclohexylmethan oder
3,5-Diisopropyl-3',5'-diethyl-4,4'-diaminodicyclohexylmethan,
perhydrierte Diaminonaphthaline,
perhydrierte Diaminoanthrazene,
oder höherwertige Amine wie
Diethylentriamin, Triethylentetramin,
Pentaethylenhexamin, Dipropylentriamin,
Tripropylentetramin, oder
N,N'-Dimethyl-ethylendiamin,
2,5-Dimethylpiperazin,
2-Methylpiperazin, Piperazin-(hydrat),
2-Hydroxyethylpiperazin oder
2-(2-Aminoethyl)-aminoethylsulfonsaures Natrium.

Anstelle dieser niedermolekularen aliphatischen Diamine oder im Gemisch hiermit können auch höhermolekulare aliphatische Di- und Polyamine verwendet werden, wie sie z.B. durch reduktive Aminierung von Polyoxyalkylenglykolen mit Ammoniak nach BE-PS 634 741 oder US-PS 3 654 370 erhalten werden können. Weitere höhermolekulare Polyoxyalkylen-Polyamine können nach Methoden, wie sie in der Firmenschrift «Jeffamine, Polyoxypropylene Amines» von Texaco Chemical Co., 1978, aufgezählt werden, hergestellt werden, beispielsweise durch Hydrierung von cyanethylierten Polyoxypropylenglykolen (DE-OS 1 193 671), durch Aminierung von Polypropylenglykolsulfonsäureestern (US-PS 3 236 895), durch Behandlung eines Polyoxyalkylenglykols mit Epichlorhydrin und einem primären Amin (FR-PS 1 466 708) oder durch Umsetzung von NCO-Prepolymeren mit Hydroxylgruppen aufweisenden Enaminen, Aldiminen oder Ketiminen und anschließende Hydrolyse gemäß DE-A 2 546 536. Geeignete höhermolekulare aliphatische Di- und Polyamine sind auch die nach DE-OS 2 948 419 und DE-OS 3 039 600 durch alkalische Hydrolyse von NCO-Prepolymeren (mit aliphatischen Diisocyanaten) mit Basen über die Carbamatstufe zugänglichen Polyamine. Diese höhermolekularen Polyamine besitzen Molekulargewichte von etwa 400 bis 6000, vorzugsweise 400 bis 3000 und besonders bevorzugt von 1000 bis 3000. Infolge ihres Aufbaus sind derartige höhermolekulare Polyamine zur Ausbildung einer nicht-brüchigen, «elastischen» Polyharnstoffumhüllung besonders geeignet. Sie werden daher, vorzugsweise in Mischung mit den niedermolekularen Di- und Polyaminoverbindungen, zur Modifizierung der Polyisocyanatteilchen eingesetzt.

Zur Modifizierung der Polyisocyanate werden aber auch Hydrazin, Alkylhydrazine sowie N,N'-Dialkylhydrazine, vorzugsweise mit $C_1$–$C_6$-Alkylgruppen, die auch als weitere Substituenten Chlor- oder OH-Gruppen tragen können, und/oder zwei- oder mehrfunktionelle, nieder- oder höhermolekulare Verbindungen mit $-CO.NH.NH_2$-Endgruppen, und einem Molekulargewicht von 90 bis etwa 6000, vorzugsweise 90 bis 3000, eingesetzt. Es sind dies z.B. Hydrazin, zumeist in Form von Hydrazinhydrat, alkylsubstituierte Hydrazine, z.B. Methylhydrazin, Ethylhydrazin, Hydroxyethyl-hydrazin oder N,N'-Dimethylhydrazin. Weiter geeignete «Stabilisatoren» sind Verbindungen mit Hydrazid-Endgruppen, z.B. Di- oder Polyhydrazide wie Carbodihydrazid, Hydracrylsäurehydrazid, Oxalsäuredihydrazid, Adipinsäuredihydrazid, Terephthalsäuredihydrazid, Isophthalsäurehydrazid oder Verbindungen mit Hydrazid- und Semicarbazid-, Carbazinester- oder Amino-Gruppen, z.B. β-Semicarbazidopropionsäurehydrazid, 2-Semicarbazidoethylencarbazinester, Aminoessigsäurehydrazid, β-Aminopropionsäurehydrazid oder Biscarbazinester oder Bissemicarbazide wie Ethylen-bis-carbazinester bzw. Ethylen-bis-semicarbazid oder Isophoron-bis-semicarbazid. Bevorzugt sind Hydrazin und niedermolekulare Verbindungen mit $-CO-NH-NH_2$-Gruppen mit Molekulargewichten von 32 bis 399. Besonders bevorzugt ist Hydrazinhydrat und β-Semicarbazidopropionsäurehydrazid sowie Alkylenbissemicarbazide.

Auch durch Reaktion von festen, feinteiligen Polyisocyanaten mit offenkettigen, mono- oder bicyclischen Amidinen bzw. Guanidinen, welche keine gegenüber Isocyanaten reaktiven Wasserstoffatome aufweisen, können feste Polyisocyanate mit einer überraschenderweise retardierten Reaktivität hergestellt werden.

Die bei der thermischen Rückspaltung der auf diese Weise gebildeten Oberflächenhülle freiwerdenden Amidin- bzw. Guanidinverbindungen können bei der Aushärtung der Klebstoffmassen

als Katalysatoren wirken bzw. andere Reaktionen, z.B. die Uretdionringspaltung, auslösen.

Erfindungsgemäß einzusetzende, durch Oberflächenmodifizierung stabilisierte, feste Polyisocyanate mit retardierter Reaktivität werden insbesondere dadurch erhalten, daß man Polyisocyanate mit Schmelzpunkten oberhalb 40 °C, vorzugsweise oberhalb 80 °C, in feinteiliger Form mit einer Teilchengröße von 0,5 bis 200 µm, vorzugsweise 1 bis 50 µm, mit offenkettigen, monocyclischen oder bicyclischen Verbindungen, welche die Amidin- und/oder die Guanidingruppierung

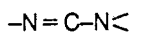
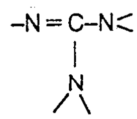

(I) (II)

ein- oder mehrmals enthalten und welche keine gegenüber Isocyanaten bei Raumtemperatur reaktiven H-Atome besitzen, in einer Menge von 0,1 bis 25 Äquivalent-%, besonders bevorzugt 0,3 bis 8 Äquivalent-%, in einem flüssigen Medium, bevorzugt aus nieder- und/oder höhermolekularen aromatischen Polyaminen, gegebenenfalls auch nieder- und/oder höhermolekularen Polyolen, und/oder Weichmachern und/oder Wasser, umsetzt.

Die erfindungsgemäß einzusetzenden offenkettigen oder cyclischen Amidine sind vorzugsweise solche entsprechend den Formeln (III) bis (VII):

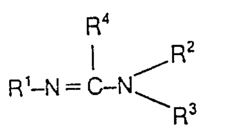

(III),

wobei

$R^1$ und $R^4$ Wasserstoff, einen geradkettigen oder verzweigten aliphatischen Kohlenwasserstoffrest mit 1 bis 18 C-Atomen, vorzugsweise 1 bis 4 C-Atomen, einen cycloaliphatischen Kohlenwasserstoff mit 5 bis 7 Ring-C-Atomen, einen araliphatischen Rest oder einen aromatischen Rest, vorzugsweise mit 6 bis 10 C-Atomen im aromatischen Rest und gegebenenfalls 1 bis 18 C-Atomen in dem aliphatischen Rest, welche Reste gegebenenfalls inerte Substituenten aufweisen und/oder durch Struktureinheiten –O–, –S– oder –N-Alkyl, vorzugsweise $N(C_1–C_4\text{-Alkyl-})$ bzw. –N-Cycloalkyl-, vorzugsweise $–N(C_5–C_7)$-cycloalkyl-, unterbrochen sind

$R^2$ und $R^3$ gleiche oder verschiedene Reste wie $R^1$, oder Alkylen-N-(di-(cyclo)-alkyl-Reste), vorzugsweise $–(CH_2)_n–N–(C_1$ bis $C_6\text{-Alkyl})_2$-Reste, (n = vorzugsweise 2 bis 12), Alkylen-N-di-$(C_1–C_4)$alkylreste oder Alkylen-N-di-$(C_5–C_7-)$cycloalkylreste, jedoch nicht H,

bedeuten,

wobei jeweils 2 der Reste $R^1$ und $R^4$ untereinander zu einem Ring verbunden sein können und wobei gegebenenfalls mehrere Amidinreste über mehrwertige Reste verbunden sind.

Solche cyclischen Amidine entsprechen dabei vorzugsweise den Formeln (IV) bis (VII), wobei entsprechend der Formel (IV)

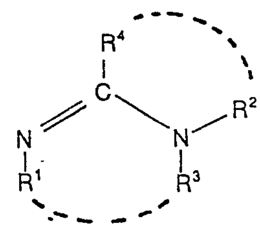

(IV)

die Reste $R^1$ und $R^3$ zusammen

und/oder

die Reste $R^2$ und $R^4$ zusammen

einen gegebenenfalls Heteroatom(gruppen) wie –O–, –S– oder –N-Alkyl-Gruppen, vorzugsweise $–N-(C_1$ bis $C_4)$-Alkylgruppen, enthaltenden, gegebenenfalls verzweigten Alkylenrest mit 2 bis 5 C-Atomen in der Alkylenkette, vorzugsweise den $–(CH_2)_2$- oder $–(CH_2)_3$-Rest darstellen;

oder entsprechend der Formel (V)

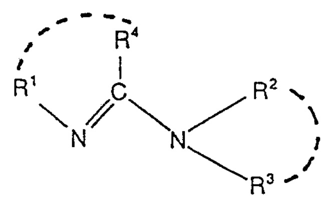

(V)

die Reste $R^1$ und $R^4$ zusammen

und/oder

die Reste $R^2$ und $R^3$ zusammen

einen gegebenenfalls Heteroatome enthaltenden, gegebenenfalls verzweigten Alkylenrest mit 2 bis 5 C-Atomen in der Alkylenkette, vorzugsweise $–(CH_2)_2–$ und $–(CH_2)_3–$ darstellen;

oder es sind cyclische Amidine der Formel (VI), welche den Amidinrest mehrfach enthalten

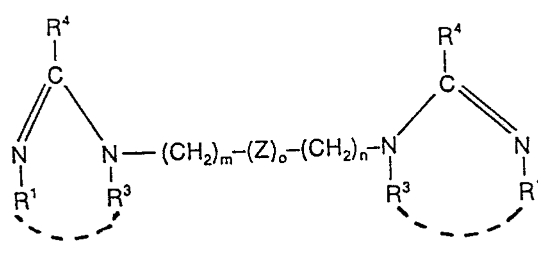

(VI)

wobei

Z eine N-Alkylgruppe oder einen geradkettigen oder verzweigten $C_2$ bis $C_{14}$-Alkylenrest, der gegebenenfalls in der Kette durch –O– unterbrochen sein kann, einen Cycloalkylenrest mit 5 bis 8 Ringgliedern oder einen Dicyclohexyl-$(C_1$- bis $C_4$-alkan)-Rest, darstellt und

m und n gleiche oder verschiedene ganze Zahlen von 2 bis 10, vorzugsweise 2 oder 3 sind, und

o Null oder 1

bedeutet;

besonders bevorzugte Amidine sind auch solche der Formel (VII)

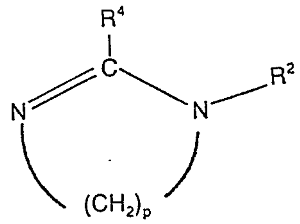

(VII)

wobei bedeuten

p 2, 3 oder 4

$R^4$ geradkettiges oder verzweigtes $C_1$–$C_4$-Alkyl (z.B. Methyl, Ethyl, Isopropyl oder tert.-Butyl),

$R^2$ geradkettiges oder verzweigtes $C_1$–$C_4$-Alkyl, $-(CH_2)_p.N.(R^4)_2$ oder $C_5$–$C_7$-Cycloalkyl.

Beispiele für offenkettige Amidine (III) sind: N,N-Dimethylformamidin, N,N-Dimethylacetamidin, N,N-Diethyl-formamidin, N,N,N′-Trimethylacetamidin, N,N-Dimethyl-N′-benzyl-acetamidin, N,N-Dicyclohexyl-N′-methylacetamidin, N,N-Dimethyl-N′-cyclohexyl-formamidin, N,N-Dimethyl-N′-tert.-butyl-formamidin.

Beispiele für die besonders bevorzugten monocyclischen Amidine (IV) sind:

1,2-Dimethyl-Δ2-imidazolin,
1-Methyl-2-phenyl-Δ2-imidazolin,
1 (N)-Methyl-Δ2-imidazolin,
2-Benzylimino-N-methyl-caprolactam,
2-Butylimino-N-methyl-butyrolactam,
1,8-Diaza-bicyclo[5,3,0]-dec-7-en,
1,8-Diaza-bicyclo[5,4,0]-undec-7-en,
1,7-Diaza-bicyclo[4,4,0]-dec-6-en,
1,6-Diaza-bicyclo[3,4,0]-non-5-en,
1,5-Diaza-bicyclo[4,3,0]-non-5-en,
1,14-Diaza-bicyclo[11,4,0]-heptadec-13-en,
1-(N)-Methyl-Δ2-tetrahydropyrimidin,
1-Cyclohexyl-2-methyl-Δ2-tetrahydropyrimidin,
1-Cyclohexyl-Δ2-tetrahydropyrimidin,
1-Benzyl-2-butyl-Δ2-tetrahydropyrimidin,
1-Methyl-2-methyl-Δ2-tetrahydropyrimidin,
1-Butyl-2-methyl-Δ2-tetrahydropyrimidin,
1-(2-Ethylhexyl)-2-methyl-Δ2-tetrahydropyrimidin,
1-Dodecyl-2-methyl-Δ2-tetrahydropyrimidin,
1-(1-Methylcyclohexyl)-2-methyl-Δ2-tetrahydropyrimidin,
1-(2-Methylhexyl)-2-methyl-Δ2-tetrahydropyrimidin,
1-(3,3,5-Trimethylcyclohexyl)-2-methyl-Δ2-tetrahydropyrimidin.

Derartige Verbindungen lassen sich insbesondere entsprechend den Angaben in der DE-A 2 439 550 synthetisieren.

Ganz besonders bevorzugte Amidine sind solche vom Typ IVa)

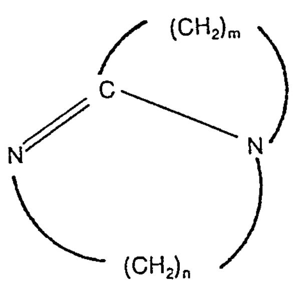

(IVa)

wobei

m 2, 3, 4, 5 oder 11 und

n 2, 3 oder 4 bedeutet.

Die Herstellung einer Anzahl solcher Verbindungen ist beispielsweise in der DE-PS 1 545 855 beschrieben.

Verbindungen vom Typ IV mit einer Dialkylaminoalkyl-Seitengruppe $R^2$ sind beispielsweise:

1-(3-N,N-Dimethylamino-propyl)-2-methyl-Δ2-tetrahydropyrimidin,
1-(2-N,N-Dimethylaminoethyl)-2-methyl-Δ2-tetrahydropyrimidin,

und werden entsprechend den Angaben der DE-A 3 049 131 hergestellt.

Beispiele für die Amidine der Formel (V) sind

1-Methyl-4-(2-tetrahydroazepinyl)-piperazin

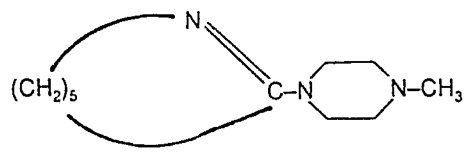

Phenyl-methyl-(2-tetrahydroazepinyl)-amin

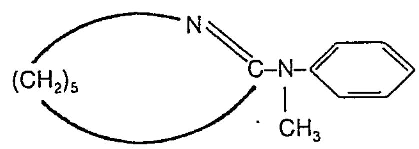

Benzyl-methyl-(2-tetrahydroazepinyl)-amin

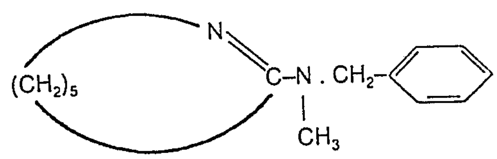

4-(2-Tetrahydroazepinyl)-morpholin

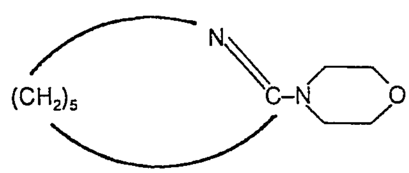

Die offenkettigen, bzw. durch Verknüpfung jeweils zweier Reste entstandenen cyclischen oder bicyclischen Amidine werden in der DE-A 2 722 514 beschrieben.

Allgemeine Hinweise zur Synthese von Amidinen finden sich in Houben-Weyl, Methoden der Organischen Chemie, Band XI, 2, Seiten 38 bis 66; Verlag G. Thieme, Stuttgart 1958.

Verbindungen vom Typ der Formel (VI) sind beispielsweise

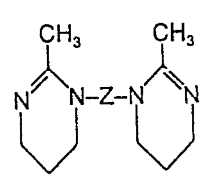

wobei vorzugsweise

$Z = -(CH_2)_2-$

$-(CH_2)_6-$

$-(CH_2)_3.N-(CH_2)_3-$

|

$CH_3$

$-(CH_2)_6.NH.CO.O.(CH_2)_3.O.(CH_2)_3.O.CO-NH(CH_2)_6-$

oder

$-(CH_2)_2-O-(CH_2)_2-$ ist.

Diese Verbindungen werden nach den in der DE-A 3 049 131 angegebenen Methoden erhalten.

Für die Oberflächenmodifizierung der festen Polyisocyanate geeignete Guanidine sind solche der Formel (VIII); es sind dies bevorzugt offenkettige oder cyclische Guanidine, aber auch Di- bzw. Tri-Guanide, sowie Verbindungen welche den Guanidinrest mehrfach tragen können:

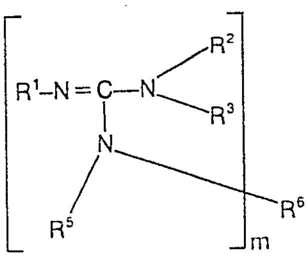

(VIII)

In der Formel (VIII) bedeuten:

m = 1 oder 2,

$R^1$, $R^2$, $R^3$ stehen für Reste, wie sie bereits für die Amidine in der Formel (III) beschrieben sind;

$R^5$ hat eine Bedeutung wie $R^2$,

$R^6$ steht entweder für einen einwertigen Rest der für $R^2$ genannten Art oder für einen zweiwertigen Alkylenrest, der gegebenenfalls durch –O–, –N(Alkyl)- oder –N(Cycloalkyl)-Reste der genannten Art unterbrochen sein kann,

wobei jeweils zwei der Reste $R^1$, $R^2$, $R^3$, $R^5$ und $R^6$ miteinander cyclisch verknüpft sein können, so daß cyclische Guanidine der nachfolgenden Strukturen entstehen:

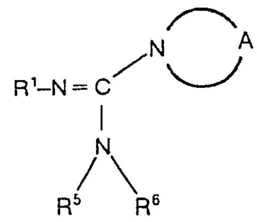

(VIII-a)

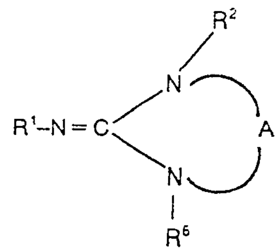

(VIII-b)

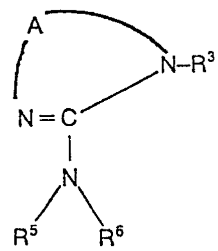

(VIII-c)

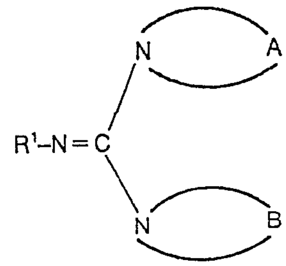

(VIII-d)

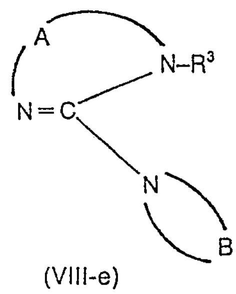

(VIII-e)

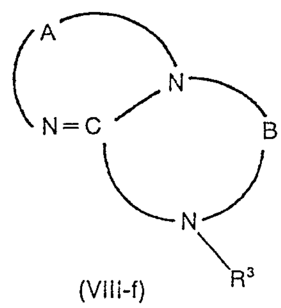

(VIII-f)

In den Formeln (VIIIa bis VIIIf) bedeuten die durch Verknüpfung jeweils zweier Substituenten entstandenen Gruppierungen A und B mindestens zweigliedrige, vorzugsweise 2 bis 5 Kettenglieder enthaltende, bivalente, aliphatische, cycloaliphatische, araliphatische oder aromatische Kohlenstoffketten, die gegebenenfalls auch durch Heteroatome (–O–, –S–, –N(Alkyl)–) unterbrochen oder mit gegenüber Isocyanaten inerten Substituenten (z.B. Halogen, Alkyl) substituiert sein können.

Weitere geeignete Guanidine sind in der folgenden Zusammenstellung wiedergegeben.

| Substituenten am Stickstoff | x-fach substituiert, | | in folgenden Guanidin-Grundgerüsten |
|---|---|---|---|
| Methyl-, Ethyl-, (Iso)propyl-, | tetra- | ——— | 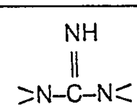 |
| (Iso)butyl-, (tert.)-Butyl, | penta- | ——— | 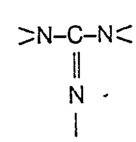 |
| (Iso)pentyl-, Hexyl-, 2-Ethylhexyl-, Octyl-, Dodecyl-, Stearyl-, Ethoxypropyl-, Butoxyhexyl-, | tri- | ——— | 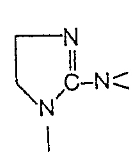 |

(Fortsetzung)

| Substituenten am Stickstoff | x-fach substituiert, | in folgenden Guanidin-Grundgerüsten |
|---|---|---|
| Cyanoethyl-, Cyanohexyl-, Butoxycarbonyl-methyl-, Methoxy-carbonylmethyl-, | tri- —— | 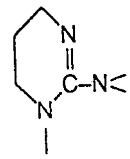 |
| Dimethylaminopropyl-, Cyclopentyl-, Cyclohexyl-, (Chlor)Benzyl-, Phenethyl-, Phenyl-, Tolyl-, | tri- —— | 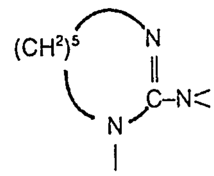 |
| Methoxyphenyl-, Ethoxycarbonylphenyl-, | mono- —— | 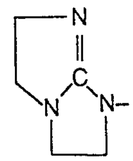 |
| | mono- —— | 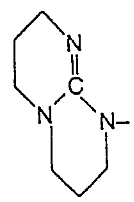 |
| | mono- —— | 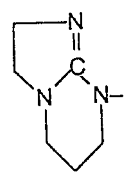 |

Weitere Beispiele sind Iminokohlensäure-bis-(sek.)-amide folgender Zusammensetzung

Methylimino-,
Ethylimino-,
Cyanethylimino-,
Dibutylaminobutylimino-
Hexylimino-
Stearylimino

Cyclohexylimino-
Benzylimino-
Phenylimino-
p-Chlorbenzylimino-
4-Methyl-benzylimino-

} Kohlensäure {
-bis-morpholid
-bis-piperidid
-bis-N'-Methyl-piperazid

Besonders geeignete cyclische Guanidinverbindungen werden in den folgenden Formeln wiedergegeben:

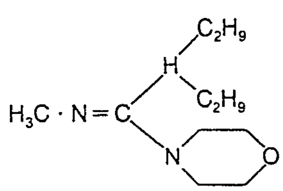

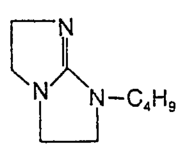

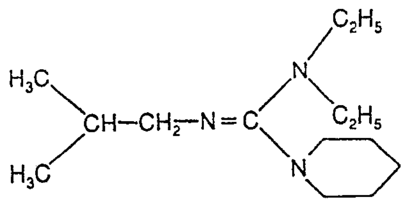

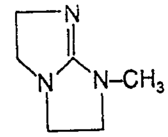

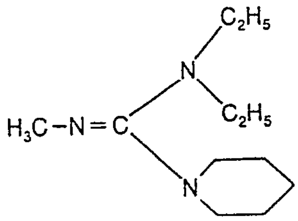

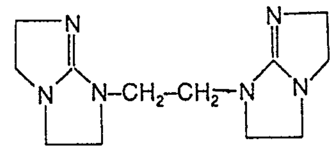

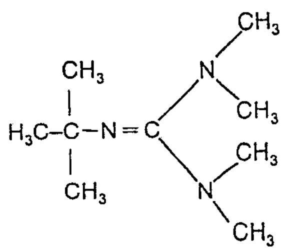

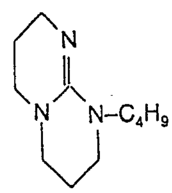

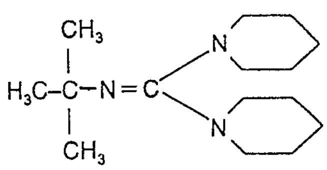

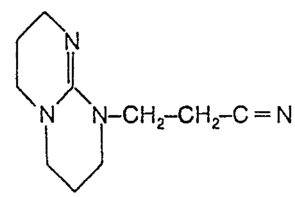

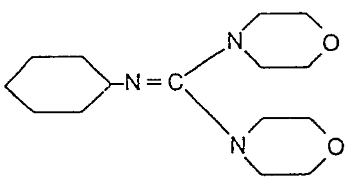

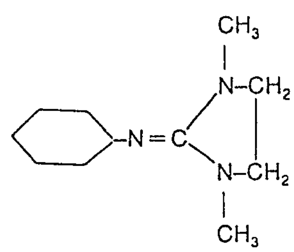

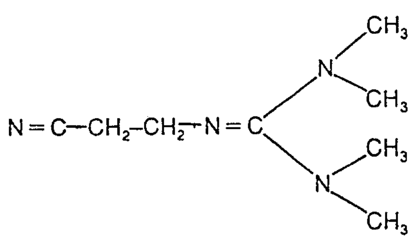

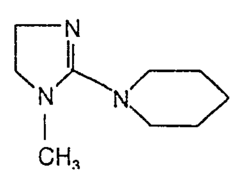

Besonders bevorzugt sind Tetramethylguanidin, Pentamethylguanidin, sowie folgende cyclische Guanidinverbindungen

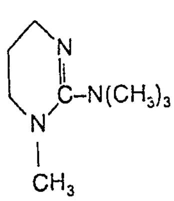

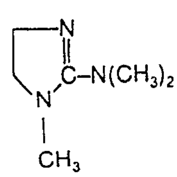

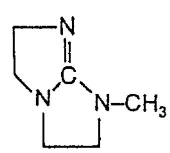

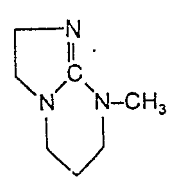

Es können auch Säureadditionssalze der Amidine bzw. Guanidine eingesetzt werden, jedoch sind diese Salze zumeist weniger bevorzugt.

Der Ausdruck «Säureadditionssalze» soll Salze, welche mit Säuren gebildet sind, ebenso einschließen, wie Salze, welche mit anderen Protonendonator-Verbindungen gebildet sind. Typische Säuren zur Herstellung dieser Salze sind Monocarbonsäuren, wie Ameisensäure, Essigsäure, Propionsäure, Buttersäure, Capronsäure, Valeriansäure, Octylsäure, Laurinsäure, Stearinsäure, Ölsäure; Dicarbonsäuren, wie Oxalsäure, Malonsäure, Bernsteinsäure, Fumarsäure, Adipinsäure; Hydroxylsäuren, wie Glykolsäure, Milchsäure, Weinsäure und dergleichen; Sulfonsäuren, wie Alkyl- oder Aryl-Sulfonsäuren, Sulfaminsäure, Sulfanilsäure; anorganische Säuren, wie Kohlensäure, Phosphorsäure, Salzsäure, Schwefelsäure und dergleichen und andere Protonendonator-Verbindungen, wie Sulfonamide; Phenole, wie Phenol, Kresol oder Thiophenole; Enole, wie Barbitursäure, Harnsäure und dergleichen. Besonders bevorzugt sind Fettsäuren mit wenigstens zwei Kohlenstoffatomen und Phenole.

In einer bevorzugten Ausführungsform werden bei Verwendung von offenkettigen, mono- oder bicyclischen Amidinen bzw. Guanidinen zur Desaktivierung der festen Polyisocyanate geringe Mengen an Wasser, niedermolekularen Glykolen oder Aminen dem Reaktionsgemisch zugefügt. Der Vorteil dieser Verfahrensweise liegt darin, daß man auch bei geringerer Amidindosierung die angestrebte Lagerstabilität der PUH-Reaktiv-Klebstoffmischung erreicht und den bei der Hitzeverfestigung durch das Amidin bedingten – in manchen Fällen aber nicht erwünschten – Katalyseeffekt auf die NCO-Folgereaktionen vermindern kann (z.B. geringere Uretdionringspaltung beim dimeren TDI und dadurch Erhalt des Uretdion-Hartsegmentes im Polyurethan, oder auch Verminderung der Biuretisierung bei Verwendung des Toluylendiisocyanat-harnstoff-diisocyanates).

Die Amidine und Guanidine können auch in Kombination mit Hydrazin-, Alkylhydrazin- oder Hydrazidverbindungen verwendet werden.

Die zur Modifizierung verwendeten Verbindungen werden in einer Menge von 0,1 bis 25 Äquivalentprozent Amin- oder Amidingruppierung pro Äquivalent NCO im Polyisocyanat, vorzugsweise 0,1 bis 8 Äquivalentprozent, besonders bevorzugt 0,3 bis 3 Äquivalentprozent eingesetzt.

Als Temperatur der Umhüllungsreaktionen werden Temperaturen unter den jeweiligen Schmelztemperaturen des Polyisocyanats gewählt. Sie liegen im allgemeinen unter 70 °C, bevorzugt bei 0 bis 50 °C.

Die Modifizierung des bei Raumtemperatur festen Isocyanats erfolgt in der Regel innerhalb weniger Minuten, so daß auch eine kontinuierliche Arbeitsweise möglich ist.

Die Modifizierung der festen Polyisocyanate durch Polyaddukt-Umhüllung wird in einem flüssigen Medium, das kein (gutes) Lösungsmittel für die festen Polyisocyanate darstellt, durchgeführt.

Das flüssige Medium kann z.B. aus Mono- und/oder (bevorzugt) Polyolen und/oder aromatischen Polyaminen mit Molekulargewichten von 62 bis 6000 und/oder aromatischen Polyaminen mit Molekulargewichten von 400 bis 6000 bestehen. Vorzugsweise werden Polyole und/oder insbesondere aromatische Polyamine des Molekulargewichtsbereichs 400 bis 6000, vorzugsweise 400 bis 3000, besonders bevorzugt 1000 bis 3000, eingesetzt, gegebenenfalls unter Zusatz von niedermolekularen Polyolen und/oder aromatischen niedermolekularen Polyaminen.

Beispiele für die Monoalkohole als flüssiges Medium sind längerkettige Alkohole wie Isohexadecanol, ferner Propoxylierungsprodukte von einwertigen Alkoholen mit Molekulargewichten von vorzugsweise 400 bis 6000, z.B. Propoxylierungsprodukte von n-Butanol. Sie müssen in einem zusätzlichen Schritt entfernt werden, bevor man die polymerumhüllten Polyisocyanate in den polyurethanbildenden Reaktivsystemen einsetzt.

Geeignete niedermolekulare Polyole sind beispielsweise Butandiol-1,4, Decandiol-1,10, Neopentylglykol, Tetra-(hydroxypropyl)-ethylendiamin oder Ricinusöl.

Als flüssiges Medium können auch weichmacherartige Verbindungen bei der Modifizierung der Isocyanate verwendet oder mitverwendet werden, z.B. Phthalate, wie Dioctyl-, Diisododecyl-, Dibenzyl-, Butyl-benzylphthalat, oder auch Phosphate mit bis zu 8 C-Atomen im Alkylrest, wie Trioctylphosphat. Auch Kohlenwasserstoffe wie sog. Butadienöle, oder Polyether mit höherem Molekulargewicht, können als Reaktionsmedium verwendet werden. Dabei wird im allgemeinen so verfahren, daß das feinpulverisierte feste Isocyanat zu einer Lösung des modifizierenden Amins im Weichmacher möglichst bei Raumtemperatur eingerührt wird. Wenn man die modifizierten Isocyanate in dieser Suspension verwenden will, kann die Zugabe der gewünschten weiteren Ausgangskomponenten, wie z.B. höhermolekulare aromatische Polyamine, nach Modifizierung des Polyisocyanats erfolgen. Auch eine Isolierung der stabilisierten Polyisocyanate, z.B. durch Filtration, und deren nachträgliche Suspendierung in den höhermolekularen Polyol- und Polyaminverbindungen ist möglich, wenn auch nicht bevorzugt.

Als flüssiges Medium ist auch überraschenderweise Wasser geeignet, wobei man dem Wasser die «Modifikatoren» zugibt und mit dieser Lösung die festen Polyisocyanate vermischt.

Bei Verwendung von Wasser als Reaktionsmedium zur Modifizierung der Polyisocyanate wird im allgemeinen das modifizierte Polyisocyanat durch Filtration isoliert, gegebenenfalls vorsichtig getrocknet und in der isolierten, feinpulvrigen Form den gewünschten höhermolekularen Polyaminen und/oder Polyolen und gegebenenfalls weiteren Ausgangskomponenten für die PUH-Reaktiv-Klebstoffmischungen zugemischt. Diese Zwischenstufe einer Isolierung der modifizierten Polyisocyanate ist jedoch nicht bevorzugt.

Den genannten flüssigen Medien (Polyolen, Polyaminen, Weichmachern oder Wasser) können gegebenenfalls Lösungsmittel unpolarer oder wenig polarer Art zugemischt werden, z.B. aliphatische, cycloaliphatische oder aromatische Kohlenwasserstoffe, Halogenkohlenwasserstoffe, Ether, Ketone oder Ester, vorzugsweise mit Siedepunkten unter 146°C. Die Lösungsmittel werden zweckmäßig anschließend wieder entfernt, z.B. durch Abziehen im Vakuum. Auch ist die Modifizierungsreaktion in wenig polaren Lösungsmitteln, welche die Polyisocyanate nicht wesentlich zu lösen vermögen, z.B. in Kohlenwasserstoffen, durchführbar, wobei die Produkte durch Filtration oder Abziehen des Lösungsmittels isoliert und anschließend in den höhermolekularen Polyolen und/oder Polyaminen suspendiert werden.

Die geschilderten Modifizierungs-Reaktionen führen zu einer Suspension von oberflächenmodifizierten, stabilisierten festen Polyisocyanaten in dem flüssigen Medium.

Die Reaktion wird vorzugsweise in einer der Reaktionskomponenten B) oder C) oder besonders bevorzugt direkt in der Mischung von B) und C) als flüssiges Medium durchgeführt, wie sie in den erfindungsgemäß zu verwendenden Klebstoffmassen enthalten sein soll.

Als höhermolekulare Verbindungen B) mit reaktiven Wasserstoffatomen werden insbesondere flüssige oder niedrigschmelzende ($<50$°C), höhermolekulare aromatische Polyamine und/oder höhermolekulare aliphatische Polyamine verwendet.

Als Polyaminoverbindungen B) mit aromatischen Aminogruppen mit einem Molekulargewichtsbereich von 400 bis 6000 werden insbesondere solche Polyaminoverbindungen eingesetzt, wie sie durch Hydrolyse von entsprechenden NCO-Prepolymeren auf der Basis von höhermolekularen Polyhydroxylverbindungen und überschüssigen aromatischen Diisocyanaten durch (vorzugsweise basische) Hydrolyse hergestellt werden können. Beispiele für dieses Verfahren werden in DE-A 2 948 419, DE-A-3 039 600, DE-A 3 112 118, der EP-A 61 627, EP-A-71 132, EP-A 71 139 und 97 869 angegeben.

Die aromatischen, höhermolekularen Polyamine können jedoch auch nach anderen Verfahren, z.B. durch Umsetzung von NCO-Prepolymeren mit überschüssigen Mengen an Hydrazin, Aminophenylethylamin, oder anderen Diaminen entsprechend DE-AS 1 694 152 hergestellt werden; eine andere Synthesemöglichkeit beschreibt die FR-PS 1 415 317 durch Überführung der NCO-Prepolymere mit Ameisensäure in die N-Formylderivate und deren Verseifung. Auch die Umsetzung von NCO-Prepolymeren mit Sulfaminsäure gemäß DE-AS 1 155 907 führt zu höhermolekularen Polyaminen. Neben an aromatische Reste gebundenen Aminogruppen (aus aromatischen Polyisocyanaten) lassen sich auch (über aliphatische Polyisocyanate) höhermolekulare Polyaminoverbindungen mit an aliphatische Reste gebundenen Aminogruppen herstellen. Die höhermolekularen Polyamine können auch durch Reaktion mit unterschüssigen Mengen an Diisocyanaten vorverlängert werden.

Niedermolekulare aromatische Polyamine (Molekulargewicht 108–399) werden bevorzugt den höhermolekularen Polyaminen B) als Kettenverlängerungsmittel C) zugemischt.

Massen, welche die modifizierten Polyisocyanate A) in Kombination mit höhermolekularen Polyaminen B) und gegebenenfalls niedermolekularen Polyamin-Kettenverlängerungsmitteln C), insbesondere aromatischen Diaminen vom Molekulargewicht 108–399, enthalten, stellen eine besonders bevorzugte Klebstoffmischung dar.

PUH-Reaktiv-Klebstoffmischungen, die modifizierten Polyisocyanate A), höhermolekulare Polyole und gegebenenfalls Polyamine als B) und Polyamine als niedermolekulare Kettenverlängerungsmittel C), insbesondere aromatische Diamine vom Molekulargewicht 108 bis 399, enthalten, sind gleichfalls bevorzugt.

Diese Mischungen können gleichfalls niedermolekulare Polyole als zusätzliche Kettenverlängerungsmittel C) enthalten.

Eine weitere bevorzugte Mischung enthält neben A) höhermolekulare Polyamine B) und niedermolekulare Polyole als C).

Die Mischungen aus B) und (gegebenenfalls) C) enthalten vorzugsweise $>50$ Äquivalent-% $NH_2$ pro Summe aus $(OH+NH_2)$-Äquivalenten in $(B+C)$.

Bevorzugt stellen $>50$ Äquivalentprozent der Endgruppen in B) Aminogruppen dar.

Als höhermolekulare Polyhydroxylverbindungen B) sind zwei- oder höherwertige Polyhydroxylverbindungen B) mit 2 bis 8, vorzugsweise 2 bis 4, Hydroxylgruppen und einem Molekulargewicht von 400 bis 6000 geeignet. Dies sind mindestens zwei Hydroxylgruppen aufweisende Polyester, Polyether, Polythioether, Polyacetale, Polycarbonate, Polylactone oder Polyesteramide, sowie auch Polybutadienverbindungen oder ihre Mischungen, wie sie für die Herstellung von homogenen, gegebenenfalls zellförmigen oder schaumstoffartigen Polyurethanen an sich bekannt und in der DE-OS 2 920 501 aufgeführt sind. Besonders bevorzugt sind Polyether und Polyester.

Die in Frage kommenden Polyether sind solche der an sich bekannten Art und werden z.B. durch Polymerisation von Tetrahydrofuran oder von Epoxiden wie Ethylenoxid, Propylenoxid, Butylenoxid, Styroloxid oder Epichlorhydrin bzw. durch Anlagerung dieser Epoxidverbindungen, vorzugsweise von Ethylenoxid oder -propylenoxid, gegebenenfalls im Gemisch oder nacheinander, an Startkomponenten mit reaktionsfähigen Wasserstoffatomen wie Wasser, mehrwertige Alkohole, Ammoniak oder mehrwertige Amine oder Zucker hergestellt.

Die in Frage kommenden, Hydroxylgruppen aufweisenden Polyester sind z.B. Umsetzungsprodukte von mehrwertigen, vorzugsweise zweiwertigen, und gegebenenfalls zusätzlich drei- und mehrwertigen Alkoholen mit mehrwertigen, vorzugsweise zweiwertigen, Polycarbonsäuren oder

deren Anhydriden oder entsprechenden Polycarbonsäureestern von niedrigen Alkoholen.

Auch Polyester aus Lactonen, z.B. -Caprolacton, ferner Polyacetale, Polycarbonate oder Hydroxylendgruppen aufweisende Polybutadiene, kommen in Betracht.

Es können auch gegebenenfalls Polyhydroxylverbindungen eingesetzt werden, in welchen hochmolekulare Polyaddukte bzw. Polykondensate oder Polymerisate in feindisperser oder auch gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen in situ in den obengenannten Hydroxylgruppen aufweisenden Verbindungen, ablaufen läßt.

Auch durch Vinylpolymerisate modifizierte Polyamino- oder Polyhydroxylverbindungen, wie sie z.B. durch Polymerisation von Styrol und Acrylnitril in Gegenwart von Polyamino- oder Polyhydroxy-polyethern oder Polycarbonaten erhalten werden, sind für die erfindungsgemäß zu verwendenden Massen geeignet.

Weitere Vertreter der genannten Verbindungen sind z.B. in High Polymers, Vol. XVI, «Polyurethans, Chemistry and Technology», verfaßt von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z.B. auf den Seiten 45 bis 71, sowie in der DE-A 2 854 384 ausführlich beschrieben.

Es ist selbstverständlich möglich, Mischungen der o.g. Polyamino- oder Polyhydroxylverbindungen einzusetzen.

Als aromatische Polyamine C) unter denen auch solche Amine verstanden werden, welche die Aminogruppe an heterocyclische Reste mit aromatischem Charakter gebunden enthalten, sind z.B. geeignet:
p-Phenylendiamin, 2,4-/2,6-Toluylendiamine, Diphenylmethan-4,4'- und/oder -2,4'- und/oder 2,2'-diamine, 3,3'-Dichlor-4,4'-diaminodiphenylmethan, 3-($C_1$–$C_8$)-Alkyl-4,4'-diaminodiphenylmethane, die 3,3'-Di-($C_1$–$C_4$)-4,4'-diaminodiphenylmethane sowie die
3,3',5,5'-Tetra-($C_1$–$C_4$)-alkyl-4,4'-diphenylmethane, die 4,4'-Diaminodiphenyl-sulfide, -sulfoxide oder -sulfone,
Ethergruppen aufweisende Diamine gemäß DE-A 1 770 525 und 1 809 172 (US-PS 3 654 364 und 3 736 295), gegebenenfalls in 5-Stellung substituierte 2-Halogen-1,3-phenylendiamine (DE-A 2 001 772, 2 025 896 und 2 065 869), Bisanthranilsäureester (DE-A 2 040 644 und 2 160 590), 2,4-Diaminobenzoesäureester nach DE-A 2 025 900, sowie durch eine oder zwei ($C_1$–$C_4$)-Alkylgruppen substituierte Toluylendiamine. Besonders bevorzugt sind 3,5-Diethyl-2,4- und/oder -2,6-diaminotoluol (besonders ihre technischen (80/20)- oder (65/35)-Isomerengemische), unsymmetrisch tetraalkylsubstituierte Diaminodiphenylmethane, z.B.
3,5-Diethyl-3'-5'-diisopropyl-4,4'-diaminodiphenylmethan und ihre Isomerengemische entsprechend DE-A 2 902 090, 4,4'-Diaminobenzanilid, sowie 3,5-Diaminobenzoesäure-($C_1$–$C_4$)-alkylester, 4,4'- und/oder 2,4'-Diamino-diphenylmethan, sowie Naphthylen-1,5-diamin.

Aromatische Diamine sind als Komponente C) gegenüber Glykolen bevorzugt. Daneben kommen auch Diole oder Diamine mit zusätzlichen Gruppen in Frage, z.B.
Adipinsäure-bis-(2-hydroxyethyl)-ester, Terephthalsäure-bis-(2-hydroxyethyl)-ester, Diol-urethane, Diol-harnstoffe oder Polyole, welche Sulfonat- und/oder Phosphonatgruppen enthalten, z.B.
1,6-Hexamethylen-bis-(2-hydroxyethylurethan),
4,4'-Diphenylmethan-bis-(2-hydroxyethylharnstoff)
oder das Addukt von Na-Bisulfit an Butendiol-1,4, bzw. dessen Alkoxylierungsprodukte. Weitere niedermolekulare Verbindungen C) werden ausführlich in der DE-A 2 854 384 beschrieben.

Als Beispiele für Diole seien genannt:
Ethylenglykol, Trimethylenglykol, Butandiol-2,3 und/oder -1,4, Hexandiol-1,6, Neopentylglykol, 1,4-Bis-hydroxyethyl-cyclohexan, 1,4-Dihydroxycyclohexan, Terephthalsäure-bis(β-hydroxyethyl)-ester, 1,4,3,6-Dianhydrohexite, 1,4-Monoanhydrotetrite, sowie weniger bevorzugt Diole mit sekundären Hydroxylgruppen, z.B. Propylenglykol, Butandiol-2,3, oder Pentandiol-2,5. Als mehrwertige Verbindungen seien genannt: Trimethylolpropan, Trimethylolethan, Hexantriol-1,2,6, Glycerin, Pentaerythrit, Chinit, Mannit, Sorbit, Rizinusöl, sowie Di-, Tri- und Tetraethylen-, -propylen-, und -butylen-glykole, ferner Bis-(2-hydroxyethyl)-hydrochinon, Bis-(2-hydroxyethyl)-resorcin, Formose oder Formit. Ferner sind geeignet tertiäraminhaltige Di- oder Polyole, z.B. N-Methyldiethanolamin, Triethanolamin oder N,N'-Bis-hydroxyethyl-piperazin.

Als Katalysatoren D) für die erfindungsgemäß zu verwendenden PU-Reaktiv-Klebstoffsysteme können die üblichen Polyurethankatalysatoren, mit besonders gutem Effekt aber organische Blei- und/oder Zinnverbindungen verwendet werden, gegebenenfalls unter Mitverwendung weiterer, üblicher Polyurethankatalysatoren, insbesondere von tert.-Amin-haltigen Katalysatoren.

Als organische Zinnverbindungen kommen Zinn-(II)-salze von Carbonsäuren wie Zinn-acetat, Zinn-octoat, Zinn-2-ethylhexanoat und Zinnlaurat, und die Zinn-(IV)-Verbindungen, z.B. Dibutylzinnoxid, Dibutylzinndichlorid, Dibutylzinndiacetat, Dibutylzinndilaurat, Dibutylzinnmaleat oder Dibutylzinndiacetat in Betracht.

Bevorzugt verwendet werden bei den Zinnkatalysatoren jedoch schwefelhaltige Zinnverbindungen wobei als Beispiele Di-(octyl)-zinn(IV)-bis-thiomethyl oder Dimethyl-zinn-(IV)-bis-thiolauryl, ferner Dimethyl-zinn-bis-thioglykolsäurehexylester oder Dibutylzinn-bis-thioglykolsäure-octylester genannt seien. Selbstverständlich können die obengenannten Katalysatoren als Gemische

eingesetzt werden, insbesondere dann, wenn die niedermolekularen Kettenverlängerer und die höhermolekularen Polyole gleichzeitig primäre und sekundäre OH-Gruppen tragen, bzw. wenn die H-aciden Verbindungen verschiedene Reaktivitäten aufweisen. Von Interesse sind auch Kombinationen der organischen Metallverbindungen mit Aminopyridinen, Hydrazinopyridinen (DE-A 2 434 185, 2 601 082 und 2 603 834), oder 1,4-Diazabicyclo-2.2.2-octan und/oder üblichen tert.-Amin-Katalysatoren, wie sie in der Polyurethanchemie üblicherweise verwendet werden.

Die Bleikatalysatoren sind dabei von besonderer Wirksamkeit, wenn in dem System Polyetherpolyole mit sekundären Hydroxylgruppen, z.B. Polypropylenoxidglykole, verwendet werden.

Bei Einsatz von (Polyester)polyolen mit im wesentlichen primären Hydroxylgruppen sind dagegen die Zinnverbindungen, besonders die Zinn/Schwefel-Katalysatoren, von besonderer Wirksamkeit. Bei $NH_2$-Gruppen-haltigen Polyethern kann zumeist auf eine Katalyse völlig verzichtet werden. Die Katalysatoren werden in der Regel in einer Menge von 0,001 bis 5 Gew.-%, vorzugsweise von 0,01 bis 2 Gew.-%, bezogen auf A) + B), eingesetzt.

Als gegebenenfalls einzusetzende Hilfs- und Zusatzstoffe E) seien genannt: Farbstoffe oder Pigmente; Füllstoffe wie Silicagel, Gips, Talkum, Aktivkohle, Metallpulver; UV-Absorptionsmittel oder Stabilisatoren wie phenolische Antioxidantien, Lichtschutzmittel; Treibmittel, wie $CO_2$ oder Fluordichlor-alkane; oberflächenaktive Zusatzstoffe wie Emulgatoren; Flammschutzmittel, oder fungistatisch und/oder bakteriostatisch wirkende Substanzen.

Das $NCO/(NH_2+OH)$-Verhältnis (freies NCO im Falle von mit Aminen modifiziertem Polyisocyanat A) bzw. Summe aus freien und mit Amidin umgesetzten NCO-Gruppen bei mit Amidin modifiziertem Polyisocyanat A) und gegebenenfalls weiterem, freiem Polyisocyanat, zu Amino- und/oder OH-Gruppen aus höhermolekularen Polyaminen und/oder Polyolen B) und/oder Kettenverlängerungsmitteln C)) beträgt in den erfindungsgemäß zu verwendenden Massen bevorzugt 0,5:1 bis 1,5:1, insbesondere 0,8 : 1 bis 1,5:1, besonders bevorzugt 0,95:1 bis 1,2:1 (Angaben in Äquivalenten).

Pro $(OH+NH_2)$-Äquivalent an höhermolekularen Polyaminen und/oder höhermolekularen Polyolen B) werden dabei gegebenenfalls 0,1 bis 10, bevorzugt 0,3 bis 8 und besonders bevorzugt 0,50 bis 5 Äquivalente an $(OH+NH_2)$-Äquivalenten an Kettenverlängerungsmitteln C), d.h. niedermolekularen Polyaminen oder niedermolekularen Polyolen, in den PUH-Reaktiv-Klebstoffmassen eingesetzt.

Die Verfestigung der erfindungsgemäß zu verwendenden Einkomponenten-Klebstoffsysteme beginnt oberhalb der durch Menge und Art des Modifizierungsmittels bestimmten «Aufdickungstemperatur» unter praktisch augenblicklichem Verlust der Fließfähigkeit. Das bedeutet, daß einerseits bis dicht unterhalb dieser Temperatur lange Verarbeitungszeiten und Fließwege gewährleistet sind, andererseits aber infolge der nach Überschreiten der Aufdickungstemperatur unmittelbar eintretenden Verdickung der Klebstoff daran gehindert wird, aus der Klebfuge auszutreten («Spaltüberbrückung»). Vorteilhaft ist auch die selbst bei höheren Temperaturen sehr lange Lagerzeit der Klebstoffmassen.

Die erfindungsgemäß zu verwendenden gegebenenfalls katalysatorhaltigen Einkomponentensysteme werden im wesentlichen durch Hitzestoß verfestigt. Bei Raumtemperatur oder wenig erhöhter Temperatur tritt auch in Gegenwart stark wirksamer Katalysatoren überraschenderweise keine Vernetzungsreaktion ein, so daß man auch katalysatorhaltige Mischungen als langzeitstabile Einkomponentensysteme bezeichnen muß.

Weiterhin kann eine Verfestigung der erfindungsgemäß zu verwendenden Einkomponentensysteme auch durch Anwendung hoher Scherkräfte herbeigeführt werden, wobei durch die mechanische Beanspruchung während des Scherprozesses die sich auf der Isocyanatteilchenoberfläche befindende Polymerhaut zerstört wird.

Zur Modifizierung der erfindungsgemäß einzusetzenden Klebstoffe können diesen natürliche oder synthetische Harze, Schutzmittel, Pigmente und Füllstoffe zugesetzt werden. Auch die Mitverwendung wasserabsorbierender Substanzen wie z.B. Natriumaluminiumsilikat oder von Lösungsmitteln wie z.B. Methylethylketon ist möglich. Mit den erfindungsgemäß zu verwendenden Klebstoffen können beliebige Materialien wie z.B. Kunststoffe, Metall, Papier, Textilien, Gummi oder keramische Werkstoffe geklebt werden. Die erfindungsgemäß zu verwendende Masse eignet sich aufgrund der niedrigen Härtungstemperatur vor allem zum Kleben von Werkstoffen, die bei höherer Temperatur eine Deformation oder Schädigung erleiden. Dies gilt insbesondere für Kunststoffe.

Die Aushärtung dieser Klebstoffe erfolgt im allgemeinen durch Einwirkung von Wärme im Temperaturbereich von 80 bis 200 °C, vorzugsweise 90 bis 140 °C. Die Aushärtung kann aber auch durch Einwirkung starker Scherkräfte, wie dies z.B. bei der Schraubensicherung der Fall ist, ausgelöst werden.

A) Beschreibung der Herstellung der Einkomponenten-Polyurethanharnstoff-Reaktiv-Klebstoffmassen 1 bis 7

Beispiel 1

In einer Mischung aus 268 Teilen eines Polyoxypropylenetherdiols vom Molekulargewicht 1000, 120 Teilen eines Polyoxypropylenethertriols vom Molekulargewicht 450, 12 Teilen Ethylenglykol und 0,2 Teilen Blei-(II)-bis-ethylhexanoat (24% Pb) werden bei Raumtemperatur 61,64 Teile dimeres Toluylen-2,4-diisocyanat suspendiert und die Suspension unter Rühren auf 120 °C erwärmt. Das dimere Toluylen-2,4-diisocyanat geht dabei in Lösung und reagiert innerhalb weniger Minuten mit dem Polyolgemisch ab (IR-Nachweis, Viskositätsanstieg). Nach 2-stündigem Entgasen bei 90 °C erhält man eine leicht opake, vorverlängerte Polyolmischung mit einer Viskosität von 35 000 mPas bei 22 °C bzw. 500 mPas bei 70 °C.

Man setzt nun 2,0 Teile eines Polyoxypropylenethertriamins vom Molekulargewicht 438 (Jeffamine® T-403 der Firma Texaco) dem oben beschriebenen, vorverlängerten, höhermolekularen Polyol zu und suspendiert darin anschließend 573,6 Teile dimeres Toluylen-2,4-diisocyanat. Die Suspension wird anschließend mit weiteren 784 Teilen eines Polyoxypropylenetherdiamins vom Molekulargewicht 1000 (s. Beispiel 9) verrührt. Nach 1-stündigem Entgasen bei 50 °C erhält man eine bei Raumtemperatur gut lagerfähige Einkomponenten-PU-Klebstoffmasse mit einer Viskosität von 100 000 mPas bei 23 °C.

Bei 100–130 °C härtet sie rasch zu einem zähelastischen, harten Polyurethanharnstoff aus.

Ein aus der Klebstoffmasse hergestellter Prüfkörper zeigt eine Härte von 70 Shore-D (siehe Tabelle 1 für die Shore-Härten solcher Prüfkörper für dieses und die folgenden Beispiele).

Werte der Klebeeigenschaften der Beispiele 1–7 siehe Tabelle 2.

Beispiel 2

Zu 98 Teilen eines Polyoxypropylenetherdiamins vom Molekulargewicht 2000 (Jeffamine® D-2000 der Firma Texaco) und 2 Teilen eines Polyoxypropylenether-Triamins vom Molekulargewicht 438 (Jeffamine® T-403) läßt man unter intensivem Rühren 5,55 Teile 1-Isocyanato-3-isocyanato-methyl-3,5,5-trimethyl-cyclohexan zulaufen. Nach 2-stündigem Entgasen bei 90 °C erhält man ein Polyoxypropylenetherdiamin vom Molekulargewicht 4222 und einer Viskosität von 80 000 mPas bei 22 °C.

Man setzt nun diesem vorverlängerten, aliphatischen Polyoxypropylenetherdiamin 20 Teile 2,4-/2,6-Diamino-3,5-diethyltoluol und 0,3 Teile 4,4'-Diamino-3,3'-dimethyldicyclohexylmethan zu und suspendiert bei Raumtemperatur in dieser Mischung 53,0 Teile dimeres 2,4-Diisocyanatotoluol. Nach 1-stündigem Entgasen bei 50 °C erhält man eine bis 60 °C lagerstabile Suspension mit einer Viskosität von 300 000 mPas bei 21 °C. Nach dem Erhitzen auf 100–130 °C härtet die Masse zu einem hochwertigen Klebstoffelastomer aus (siehe Tabellen 1 und 2).

Beispiel 3

Aus einem NCO-Prepolymeren auf der Basis eines Polyoxypropylenetherdiols vom Molekulargewicht 2000 und Toluylen-2,4-diisocyanat im Molverhältnis 1:2 wird nach dem Verfahren gemäß EP-71 834 (DE-OS 3 131 252) durch alkalische Hydrolyse ein aromatischer Aminopolyether hergestellt.

In 100 Teilen des aromatischen Aminopolyethers (Aminzahl 48,4, Molekulargewicht 2314), werden 1,0 Teile 4,4'-Diamino-3,3'-dimethyl-dicyclohexylmethan und 20 Teile 2,4-/2,6-Diamino-3,5-diethyl-toluol (Molverhältnis 65:35) gelöst und 65,0 Teile 3,3'-Diisocyanato-4,4'-dimethyl-N,N'-diphenylharnstoff suspendiert. Nach 1-stündigem Entgasen bei 50 °C erhält man eine bis 50 °C lagerstabile Suspension mit einer Viskosität von 160 000 mPas bei 21 °C. Eigenschaften siehe Tabellen 1 und 2.

Beispiel 4

Zu 105,55 Teilen eines vorverlängerten Polyoxypropylenetherdiamins (Molekulargewicht 4222, Viskosität 80 000 mPas bei 22 °C), entsprechend Beispiel 2 hergestellt, setzt man 18 Teile 2,4/2,6-Diamino-3,5-diethyltoluol (Molverhältnis 65/35), 4 Teile 4,4',4'-Triamino-triphenylmethan und 0,7 Teile 4,4'-Diamino-3,3'-dimethyl-dicyclohexylmethan zu und suspendiert bei Raumtemperatur in dieser Mischung 56/94 Teile 3,3'-Diisocyanato-4,4'-dimethyl-N,N'-diphenylharnstoff. Man erhält eine bis 60 °C lagerstabile Suspension mit einer Viskosität von 400 000 mPas bei 21 °C. Eigenschaften siehe Tabellen 1 und 2.

Beispiel 5

In einer Mischung aus 100 Teilen eines Polyoxypropylenetherdiols vom Molekulargewicht 1000, 25 Teilen 2,4/2,6-Diamino-3,5-diethyltoluol, 1,0 Teilen 2,5-Diamino-2,5-dimethylhexan und 0,2 Teilen Pb-3-Ethyl-hexoat (Pb-Octoat) werden 124,3 Teile dimeres 2,4-Diisocyanatotoluol suspendiert. Nach 1-stündigem Entgasen bei 50 °C erhält man eine bis 60 °C lagerstabile Klebstoffsuspension mit einer Viskosität von 4000 mPas/22 °C. Eigenschaften siehe Tabellen 1 und 2.

Vergleichsversuche zu Beispiel 5

(Vergleichs)Beispiel 6 (ohne Amine)

In einer Mischung aus 100 Teilen eines Polyoxypropylenetherdiols vom Molekulargewicht 1000, 0,3 Teilen 2,5-Diamino-2,5-dimethylhexan und 0,2 Teilen Pb-Octoat werden 19,9 Teile dimeres 2,4-Diisocyanatotoluol suspendiert. Nach 1-stündigem Entgasen bei 50 °C erhält man eine bis 60 °C lagerstabile Suspension. Bei 100–130 °C härtet sie rasch zu einem Polyurethan der Härte 60 Shore-A. Wie die Ergebnisse in Tabelle 2 zeigen, sind die Klebeeigenschaften dieses Materials völlig ungenügend.

(Vergleichs)Beispiel 7 (ohne Amine und ohne Stabilisierung des dimeren Diisocyanats)

In 100 Teile eines Polyoxypropylenetherdiols vom Molekulargewicht 1000 werden 19,1 Teile dimeres 2,4-Diisocyanatotoluol suspendiert. Die Suspendierung ist bei Raumtemperatur auch ohne Stabilisierung etwa 6 Wochen chemisch stabil, härtet aber auch bei Temperaturen bis zu 200 °C nur sehr langsam und unbefriedigend aus. Die Klebstoffeigenschaften sind völlig unzureichend (siehe Tabelle 2).

Beispiel 8

Zu 105,55 Teilen des in Beispiel 2 beschriebenen, über Harnstoffgruppen vorverlängerten Polyoxypropylenetherdiamins (Molekulargewicht 4222, Viskosität 80 000 mPas bei 22 °C), setzt man 20 Teile 2,4/2,6-Diamino-3,5-diethyltoluol (Molverhältnis 65/35), 0,5 Teile 4,4'-Diamino-3,3'-dimethyl-dicyclohexylmethan und 1,0 Teile 1,5-Diazabicyclo[4,3,0]-non-5-en zu und suspendiert bei Raumtemperatur in dieser Mischung 52,98 Teile dimeres 2,4-Diisocyanatotoluol. Nach 1-stündigem Entgasen bei 50 °C erhält man eine bis 60 °C lagerstabile Suspension mit einer Viskosität von 300 000 mPas bei 21 °C. Eigenschaften siehe Tabellen 1 und 2. Härte: 62 Shore-D.

B) Prüfung und Klebeeigenschaften

Prüfvorschrift zur Ermittlung der Scherfestigkeit von Klebungen

Als Prüfmaterial dienen Streifen eines mit 30% glasfaserverstärkten Polyesterharzes der Abmessung 20 mm × 40 mm × 4 mm (SMC) und Eisenbleche der Abmessung 20 mm × 40 mm × 2 mm, die vor dem Klebstoffauftrag mit einem Schleifpapier der Körnung 280 leicht angeschliffen werden.

Die Streifen werden auf 120 °C vorgewärmt. Nach Auftrag des Klebstoffs in einer Stärke von 0,2 mm werden zwei Streifen so zusammengelegt, daß eine überlappte Fläche von 10 × 20 mm entsteht. Diese Probekörper werden während der unten angegebenen Zeit bei 120 °C gelagert. Unmittelbar darauf erfolgt die manuelle Prüfung der Scherfestigkeit, die bei 1N/mm² ohne Trennung der Klebung nun eine Handhabung zur Weiterverarbeitung erlaubt. Nach 1-stündiger Lagerung der Prüfkörper bei Raumtemperatur wird die Scherfestigkeit nach DIN 53 283 mit einem Spindelvorschub von 100 mm pro Minute ermittelt.

Die Ergebnisse sind in der Tabelle 2 für die Klebung auf glasfaserverstärkten Polyesterharzen bzw. auf Eisen dargestellt. Die Scherfestigkeiten wurden nach 15 Minuten bei 120 °C zunächst sofort, d. h. noch im heißen Zustand per Handprobe geprüft (siehe erste Spalten) bzw. nach Lagerung der Klebung nach 1 Stunde bei Raumtemperatur geprüft (siehe weitere Spalten).

Als weiteres Testmaterial wurde neben dem glasfaserverstärkten Polyester und Eisen auch der Gummiwerkstoff SBR-2 (Material auf Basis Styrol-Butadien-Kautschuk, Shore A 90) nach DIN 16 909 verwendet. Als Klebstoff wurde die Klebmasse nach Beispiel 9 gewählt. Die Klebstoffabbindung erfolgte in 15 Minuten bei 120 °C. Der im Trennversuch bei einem Spindelvorschub von 100 mm/Min. nach DIN 53 273 (nach 24-stündiger Lagerung bei Raumtemperatur) ermittelte Wert betrug 5,8 N/mm.

Tabelle 1

Shore-Härten von Prüfkörpern, hergestellt aus den Klebstoffmischungen durch Erhitzen auf 120 °C.

| Beispiel Nr. | Shore-Härte Shore-A | Shore-D |
|---|---|---|
| 1 | 95 | |
| 2 | – | 65 |
| 3 | – | 67 |
| 4 | – | 65 |
| 5 | – | 58 |
| 6 (Vergleich) | 60 | – |
| 7 (Vergleich) | (flüssig) | – |
| 8 | – | 62 |

Tabelle 2

| Klebstoffmischung nach Beispiel | Scherfestigkeit [N/mm²] (nach 15 Min./120 °C) sofort (heiß geprüft in Handprobe) SMC | Eisen | Scherfestigkeit [N/mm²] (nach 15 Min./120 °C) und nach Lagerung (1 Stunde bei Raumtemp.) SMC | Eisen |
|---|---|---|---|---|
| 1 | > 1 | > 1 | 9,7 | 13,8 |
| 2 | > 1 | > 1 | 6,7 | 9,6 |
| 3 | > 1 | > 1 | 11,2 | 16,5 |
| 4 | > 1 | > 1 | 9,1 | 16,5 |
| 5 | > 1 | > 1 | 7,6 | 13,5 |
| 6 } Vergleich | 0 | 0 | 1,8 | 1,6 |
| 7 } Vergleich | 0 | 0 | 0 | 0 |
| 8 | > 1 | > 1 | 4,2 | 9,0 |

SMC = Sheet Moulding Compound (glasfaserverstärkte Polyesterharz-Platte).

Beispiel 9

Herstellung des Polyoxypropylenetherdiamins, MG-1000 (von Beispiel 1 – nicht erfindungsgemäß).

Ein durch Umsetzung von Bis-(4-hydroxyphenyl)-propan erhaltenes Polyoxypropylenetherdiol vom Molekulargewicht etwa 1000 wird durch Druckaminierung mittels überschüssiger Mengen flüssigen Ammoniaks bei 150–160 bar/225 °C 12 Stunden in das Polyetherdiamin (Molekulargewicht 1000) überführt.

**Patentansprüche**

1. Verwendung von bei Raumtemperatur oder wenig erhöhten Temperaturen fließfähigen oder

leicht aufschmelzenden, lagerstabilen, durch Erwärmen auf eine Temperatur oberhalb 80 °C härtbaren Massen, enthaltend

A) feinteilige Polyisocyanate mit einem Schmelzpunkt >40 °C,

B) aliphatische und/oder aromatische Polyamine und/oder Polyole mit Molekulargewichten von 400 bis 6000, sowie gegebenenfalls

C) aromatische Polyamine und/oder aliphatische und/oder cycloaliphatische Polyole mit Molekulargewichten von 62 bis 399,

als Reaktivklebstoff, wobei

– die Polyisocyanate A) durch Reaktion von 0,1–25% ihrer NCO-Gruppen mit Polyaminen, Hydrazin, Alkylhydrazinen, Hydraziden, Amidinen und/oder Guanidinen unter Ausbildung einer Oberflächenhülle modifiziert worden sind,

– mindestens 25% der Summe aus OH- und $NH_2$-Gruppen in den Komponenten B) und C) $NH_2$-Gruppen sind und

– die Verwendung von Massen mit einem mittleren Äquivalentgewicht der Komponenten B) + C) >500 ausgenommen ist.

2. Verwendung gemäß Anspruch 1, dadurch gekennzeichnet, daß die Polyisocyanate A) einen Schmelzpunkt >80 °C aufweisen.

3. Verwendung gemäß Anspruch 1 oder 2, dadurch gekennzeichnet, daß die Polyisocyanate A) durch Reaktion von 0,1–8% ihrer NCO-Gruppen modifiziert worden sind.

4. Verwendung gemäß Anspruch 1 bis 3, dadurch gekennzeichnet, daß die Polyisocyanate A) durch Reaktion mit (cyclo)aliphatischen Polyaminen modifiziert worden sind.

5. Verwendung gemäß Anspruch 1 bis 3, dadurch gekennzeichnet, daß die Polyisocyanate A) durch Reaktion mit polyfunktionellen Hydrazidverbindungen modifiziert worden sind.

6. Verwendung nach Ansprüchen 1 bis 5, dadurch gekennzeichnet, daß Komponente B) ein Polyamin ist.

7. Verwendung nach Ansprüchen 1 bis 5, dadurch gekennzeichnet, daß Komponente B) ein Polyol und C) ein Polyamin ist.

8. Verwendung nach Ansprüchen 1 bis 7, dadurch gekennzeichnet, daß man das NCO–($NH_2$+OH)-Äquivalentverhältnis in A/(B+C) in der Klebstoffmischung zwischen 0,8:1 bis 1,5:1, besonders zwischen 0,95:1 bis 1,2:1, wählt.

9. Verwendung nach Ansprüchen 1 bis 8, dadurch gekennzeichnet, daß die Massen pro Äquivalent der Komponente B) 0,1–10 Äquivalente C) enthalten.

10. Verwendung nach Ansprüchen 1 bis 9, dadurch gekennzeichnet, daß die Massen durch Erwärmen auf Temperaturen zwischen 80 und 200 °C gehärtet werden.

## Claims

1. The use of storable compositions which flow freely or melt easily at room temperature or slightly elevated temperature and which can be hardened by heating to a temperature above 80 °C, containing

A) finely divided polyisocyanates having a melting point of >40 °C,

B) aliphatic and/or aromatic polyamines and/or polyols having molecular weights of from 400 to 6000 and, optionally,

C) aromatic polyamines and/or aliphatic and/or cycloaliphatic polyols having molecular weights of from 62 to 399,

as a reactive adhesive,

– the polyisocyanates A) having been modified by reaction of 0.1 to 25% of their NCO groups with polyamines, hydrazine, alkyl hydrazines, hydrazides, amidines and/or guanidines with formation of a surface shell,

– at least 25% of the sum of OH and $NH_2$ groups in components B) and C) being $NH_2$ groups and

– the use of compositions having a mean equivalent weight of components B)+C) of >500 being excluded.

2. The use claimed in claim 1, characterized in that the polyisocyanates A) have a melting point of >80 °C.

3. The use claimed in claim 1 or 2, characterized in that the polyisocyanates A) have been modified by reaction of 0.1 to 8% of their NCO groups.

4. The use claimed in claims 1 to 3, characterized in that the polyisocyanates A) have been modified by reaction with (cyclo)aliphatic polyamines.

5. The use claimed in claims 1 to 3, characterized in that the polyisocyanates A) have been modified by reaction with polyfunctional hydrazide compounds.

6. The use claimed in claims 1 to 5, characterized in that component B) is a polyamine.

7. The use claimed in claims 1 to 5, characterized in that component B) is a polyol and component C) a polyamine.

8. The use claimed in claims 1 to 7, characterized in that the equivalent NCO–($NH_2$+OH) equivalent ratio in A/(B+C) in the adhesive mixture is between 0.8:1 and 1.5:1 and more especially between 0.95:1 and 1.2:1.

9. The use claimed in claims 1 to 8, characterized in that the compositions contain from 0.1 to 10 equivalents C) per equivalent of component B).

10. The use claimed in claims 1 to 9, characterized in that the compositions are hardened by heating to temperatures of from 80 to 200 °C.

## Revendications

1. Utilisation de masses fluides ou fondant facilement à température ambiante ou légèrement au-dessus, stables à la conservation mais durcissables par chauffage à une température supérieure à 80 °C, contenant:

A) des polyisocyanates en fines particules ayant un point de fusion supérieur à 40 °C,

B) des polyamines et/ou polyols aliphatiques et/ou aromatiques de poids moléculaire 400 à 6000, et le cas échéant

C) des polyamines aromatiques et/ou des polyols aliphatiques et/ou cycloaliphatiques de

poids moléculaire 62 à 399, en tant que colles réactives, étant précisé que:

– les polyisocyanates A) ont été modifiés par réaction de 0,1 à 25% de leurs groupes NCO avec des polyamines, l'hydrazine, des alkylhydrazines, des hydrazides, des amidines et/ou des guanidines, avec formation d'une enveloppe de surface,

– au moins 25% de la somme des groupes OH et $NH_2$ des composants B) et C) sont des groupes $NH_2$, et

– l'utilisation de masses avec un poids équivalent moyen des composants B)+C) supérieur à 500 est exclue.

2. Utilisation selon la revendication 1, caractérisée en ce que les polyisocyanates A) ont un point de fusion supérieur à 80 °C.

3. Utilisation selon la revendication 1 ou 2, caractérisée en ce que les polyisocyanates A) ont été modifiés par réaction de 0,1 à 8% de leurs groupes NCO.

4. Utilisation selon les revendications 1 à 3, caractérisée en ce que les polyisocyanates A) ont été modifiés par réaction avec des polyamines (cyclo)aliphatiques.

5. Utilisation selon les revendications 1 à 3, caractérisée en ce que les polyisocyanates A) ont été modifiés par réaction avec des dérivés polyfonctionnels d'hydrazides.

6. Utilisation selon les revendications 1 à 5, caractérisée en ce que le composant B) est une polyamine.

7. Utilisation selon les revendications 1 à 5, caractérisée en ce que le composant B) est un polyol et le composant C) une polyamine.

8. Utilisation selon les revendications 1 à 7, caractérisée en ce que, dans le mélange adhésif, on règle le rapport des équivalents de NCO–($NH_2$+OH) dans A/(B+C) à un niveau de 0,8:1 à 1,5:1, plus spécialement de 0,95:1 à 1,2:1.

9. Utilisation selon les revendications 1 à 8, caractérisée en ce que les masses contiennent de 0,1 à 10 équivalents de C) par équivalent du composant B).

10. Utilisation selon les revendications 1 à 9, caractérisée en ce que les masses sont durcies par chauffage à des températures de 80 à 200 °C.